# EUROPÄISCHE PATENTSCHRIFT

(11) **EP 2 234 864 B1**
(45) Veröffentlichungstag und Bekanntmachung des Hinweises auf die Patenterteilung: **28.09.2011**
(21) Anmeldenummer: 08871282.3
(22) Anmeldetag: 26.11.2008
(51) Int. Cl.: B62D 15/02

(54) **FAHRERASSISTENZSYSTEM UND VERFAHREN ZUR UNTERSTÜTZUNG DES FAHRERS EINES FAHRZEUGS BEIM HALTEN EINER DURCH FAHRSPURMARKIERUNGEN BEGRENZTEN FAHRSPUR**
DRIVER ASSISTANCE SYSTEM AND METHOD FOR SUPPORTING THE DRIVER OF A VEHICLE IN MAINTAINING A TRAFFIC LANE LIMITED BY TRAFFIC LANE MARKINGS
SYSTEME D'AIDE À LA CONDUITE ET PROCEDE POUR AIDER LE CONDUCTEUR D'UN VEHICULE AUTOMOBILE À RESPECTER UNE TRAJECTOIRE DELIMITEE PAR DES MARQUAGES DE VOIE

(30) Priorität: 25.01.2008 DE 102008005999
(43) Veröffentlichungstag der Anmeldung: 06.10.2010
(73) Patentinhaber: Daimler AG, 70327 Stuttgart (DE)
(72) Erfinder: DANNER, Bernd, 72631 Aichtal (DE); DUDECK, Ingo, Weinstadt (DE); KOLBE, Uli, 70199 Stuttgart (DE); MÖBUS, Rainer, 70178 Stuttgart (DE); RAAB, Markus, 74912 Kirchhardt (DE); REGENSBURGER, Uwe, 73760 Ostfildern (DE); SCHÖB, Reinhold, 71126 Gäufelden (DE)
(74) Vertreter: JENSEN & SON
(86) Internationale Anmeldenummer: PCT/EP2008/010007
(87) Internationale Veröffentlichungsnummer: WO 2009/092416

(56) Entgegenhaltungen:
- EP-A- 1 867 542
- WO-A-2005/118372

## Beschreibung

Die Erfindung betrifft ein Fahrerassistenzsystem gemäß dem Oberbegriff des Patentanspruchs 1 sowie ein Verfahren zur Unterstützung des Fahrers eines Fahrzeugs beim Halten einer durch Fahrspurmarkierungen begrenzten Fahrspur gemäß dem Oberbegriff des Patentanspruchs 9, wie sie beispielsweise aus der DE 694 02 278 T2 bekannt sind.

Die DE 694 02 278 T2 offenbart ein Verfahren zur Unterstützung des Fahrers eines Fahrzeugs beim Fahrspurhalten, bei dem der Verlauf einer von einem Fahrzeug befahrenen Fahrspur durch Detektion von spurbegrenzenden Fahrspurmarkierungen erfasst wird und bei dem im Falle einer seitlichen Annäherung des Fahrzeugs zu einer der Fahrspurmarkierungen ein Lenkmoment auf eine Lenkanlage des Fahrzeugs ausgeübt wird, durch das der Fahrer beim Halten der Fahrspur unterstützt wird. Falls die Fahrspurmarkierung anschließend überfahren wird, wird der Fahrer hierüber durch eine haptische und akustische Warnung informiert. Bei diesem Verfahren wird die Umgebung des Fahrzeugs zusätzlich nach kollisionsgefährdenden Objekten überwacht und eine Seitwärtsbewegung des Fahrzeugs wird verhindert oder gehemmt, wenn durch die Überwachung Kollisionsgefährdende Hindernisse festgestellt werden.

Ein ähnliches Verfahren ist auch aus der EP 1867542 A1 bekannt. Bei diesem Verfahren wird eine Spurhaltefunktion unwirksam geschaltet, wenn anhand der Betätigung eines Fahrtrichtungsanzeigers eine Spurwechselabsicht des Fahrers erkannt wird und wenn weiterhin erkannt wird, dass auf der durch den Fahrtrichtungsanzeiger angezeigten Seite der eigenen Fahrspur eine Nachbarfahrspur vorhanden ist, die von der eigenen Fahrspur durch eine Spurmarkierung getrennt ist, welche überfahren werden darf, und wenn zudem erkannt wird, dass auf der Nachbarfahrspur kein überholendes Fahrzeug heranfährt.

Aus der WO 2006/081936 A1 ist ein Verfahren zur Unterstützung des Fahrers eines Fahrzeugs beim Spurhalten bekannt, bei dem die voraussichtliche Abweichung der Fahrzeugposition von einer anhand von Fahrspurmarkierungen bestimmten Sollspur ermittelt wird und bei Überschreitung von bestimmten Abweichschwellen ein unterstützendes Lenkmoment generiert wird, das den Fahrer beim Zurückführen des Fahrzeugs in die Sollspur unterstützt. Die Abweichschwellen können dabei in Abhängigkeit von Objekten variiert werden, die in Fahrtrichtung des Fahrzeugs seitlich der von Fahrzeug befahrenen Fahrspur detektiert werden.

Der Erfindung liegt die Aufgabe zugrunde, ein Fahrerassistenzsystem und ein Verfahren der eingangs genannten Art anzugeben, mit dem der Fahrer eines Fahrzeugs beim Spurhalten unterstützt wird, wobei die systemseitigen Unterstützungsmaßnahmen derart vorgenommen werden, dass sie vom Fahrer als angemessen und nicht störend empfunden werden.

Die Aufgabe wird durch die Merkmale der unabhängigen Ansprüche gelöst. Vorteilhafte Ausgestaltungen und Weiterbildungen ergeben sich aus den Unteransprüchen.

Das erfindungsgemäße Fahrerassistenzsystem umfasst eine Fahrspurerkennungseinrichtung zur Erfassung einer von Fahrzeug befahrenen Fahrspur anhand von spurbegrenzenden Fahrspurmarkierungen, eine Warneinrichtung zur Ausgabe einer Spurverlasswarnung an einen Fahrer des Fahrzeugs beim Erkennen einer Spurverlasstendenz, eine Objekterkennungseinrichtung zur Detektion von sich neben der erfassten Fahrspur befindenden seitlichen Objekten und mit eine Steuereinrichtung zur Durchführung eines kurskorrigierenden Stelleingriffs, wobei die Fahrspurerkennungseinrichtung eingerichtet ist, anhand der Art der Fahrspurmarkierungen zu erkennen, ob ein Verlassen der Fahrspur durch Überfahren der jeweiligen Fahrspurmarkierung zulässig ist oder unzulässig ist, und die Steuereinrichtung eingerichtet ist, den Stelleingriff im Anschluss an die Ausgabe der Spurverlasswarnung unter der Bedingung auszulösen, dass ein Verlassen der Fahrspur unzulässig ist oder dass bei einem zulässigen Verlassen der Fahrspur die Gefahr besteht, dass das Fahrzeugs mit einem der erfassten seitlichen Objekte kollidiert.

Dem Fahrer wird durch das Fahrerassistenzsystem demnach eine Unterstützung in mehreren Eskalationsstufen angeboten: in einer ersten Eskalationsstufe wird eine auf die Spurverlasstendenz hinweisende Spurverlasswarnung ausgegeben und in einer anschließenden zweiten Eskalationsstufe wird ein der Spurverlasstendenz entgegen wirkender kurskorrigierender Stelleingriff vorgenommen. Die zweite Eskalationsstufe wird dabei nur unter der Bedingung ausgelöst, dass das Verlassen der Fahrspur unzulässig ist oder aufgrund einer möglichen Kollision mit seitlichen Objekten gefährlich ist. Das heißt, in Situationen, in denen das Überfahren der Fahrspurmarkierung sowohl zulässig als auch gefahrlos möglich ist, wird die zweite Eskalationsstufe nicht ausgelöst und der kurskorrigierende Stelleingriff somit nicht durchgeführt. In solchen Situationen wird davon ausgegangen, dass der Fahrer die Fahrspur bewusst verlassen will und einen dem Spurverlassen entgegen wirkenden Stelleingriff als unangemessene und unerwartete Systemaktion empfinden wird, was bei häufigem Auftreten zu Akzeptanzproblemen führen würde.

Vorzugsweise ist die Objekterkennungseinrichtung derart eingerichtet, das sie neben den seitlichen Objekten auch vordere Objekte, welche sich innerhalb der Fahrspur vor dem Fahrzeug befinden, detektieren kann, und die Steuereinrichtung ist vorteilhafterweise derart eingerichtet, dass sie den Stelleingriff unterdrückt, wenn eine Situationsbewertung ergibt, dass die Gefahr einer Kollision des Fahrzeugs mit einem der erfassten vorderen Objekte besteht.

Auf diese Weise lässt sich verhindern, dass ein vom Fahrer vorgenommenes Ausweichmanöver zur Umfahrung eines sich im Fahrweg des Fahrzeugs befindenden Hindernisses durch den systemseitig vorgenommenen Stelleingriff verhindert oder erschwert wird. Der Fahrer kann somit in Gefahrensituationen einem als Hindernis erkannten vorderen Objekt ausweichen und dabei die Fahrspur ohne systemseitige Gegenreaktion auch dann verlassen, wenn ein Verlassen der Fahrspur unzulässig wäre.

Vorzugsweise ist die Fahrspurerkennungseinrichtung eingerichtet, das Verlassen der Fahrspur als zulässig zu beurteilen, wenn die hierbei überfahrene Fahrspurmarkierung als unterbrochene Linie ausgeführt ist, und als unzulässig zu beurteilen, wenn die hierbei überfahrene Fahrspurmarkierung als durchgezogene Linie ausgeführt ist.

Vorzugsweise ist die die Steuereinrichtung eingerichtet, den Stelleingriff durch individuelles Abbremsen einzelner Räder des Fahrzeugs durchzuführen.

In einer vorteilhaften Ausgestaltung des Fahrerassistenzsystems ist die Warneinrichtung eingerichtet, die Spurverlasswarnung in Form von Lenkradvibrationen an den Fahrer auszugeben.

In einer weiteren vorteilhaften Ausgestaltung des Fahrerassistenzsystems ist die Objekterkennungseinrichtung eingerichtet, sowohl stehende als auch bewegte Objekte außerhalb der Fahrspur zu erkennen.

Vorzugsweise ist die Steuereinrichtung eingerichtet, den Stelleingriff bei einem zulässigen Verlassen der Fahrspur zu unterdrückten, sofern neben der Fahrspur eine für einen Spurwechsel ausreichend große Freifläche vorhanden ist.

Vorzugsweise ist die Fahrspurerkennungseinrichtung als videobasiertes Spurerkennungssystem ausgeführt.

Vorzugsweise ist die Objekterkennungseinrichtung als Radarsystem ausgeführt ist.

Bei dem erfindungsgemäßen Verfahren zur Unterstützung des Fahrers eines Fahrzeugs beim Halten einer durch Fahrspurmarkierungen begrenzten Fahrspur, werden die Fahrspurmarkierungen und die Lage des Fahrzeugs innerhalb der Fahrspur erfasst, die Umgebung des Fahrzeugs auf das Vorhandensein von kollisionsgefährdenden seitlichen Objekten neben der Fahrspur abgetastet, und beim Verlassen oder drohenden Verlassen der Fahrspur eine Spurverlasswarnung an den Fahrer ausgegeben und ein dem Spurverlassen entgegen wirkender kurskorrigierender Stelleingriff durchgeführt, wobei der kurskorrigierende Stelleingriff zeitlich nach der Ausgabe der Spurverlasswarnung durchgeführt wird, wobei weiterhin das Verlassen der Fahrspur anhand der Art der hierbei zu überfahrenden Fahrspurmarkierung als zulässig oder unzulässig beurteilt wird und wobei der kurskorrigierende Stelleingriff unterdrückt wird, wenn das Verlassen der Fahrspur als zulässig beurteilt worden ist und keine kollisionsgefährdende seitliche Objekte neben der Fahrspur erkannt worden sind.

Vorzugsweise wird die Umgebung des Fahrzeugs weiterhin auf das Vorhandensein von kollisionsgefährdenden vorderen, sich vor dem Fahrzeug innerhalb der Fahrspur befindenden, Objekten untersucht, und der kurskorrigierende Stelleingriff wird unterdrückt, wenn ein solches kollisionsgefährdendes vorderes Objekt als vorhanden erkannt wird.

Der Stelleingriff wird somit in Situationen unterdrückt, in denen davon ausgegangen werden kann, dass der Fahrer die Fahrspur bewusst verlässt, um einem als Hindernis erkannten kollisionsgefährdenden vorderen Objekt auszuweichen.

Vorzugsweise wird das Verlassen der Fahrspur dabei dann als zulässig beurteilt, wenn die beim Spurverlassen zu überfahrende Fahrspurmarkierung als unterbrochene Linie ausgeführt ist.

Vorzugsweise wird das Verlassen der Fahrspur dann als unzulässig beurteilt, wenn die beim Spurverlassen zu überfahrende Fahrspurmarkierung als durchgezogene Linie ausgeführt ist.

In einer vorteilhaften Weiterbildung des Verfahrens wird abgeschätzt, wie hoch beim Spurverlassen die Gefahr einer Kollision des Fahrzeugs mit einem der kollisionsgefährdenden seitlichen Objekte ist, und der Stelleingriff wird in Abhängigkeit der abgeschätzten Gefahrenhöhe durchgeführt.

In einer vorteilhaften Weiterbildung wird die Spurverlasswarnung als haptische Warnung ausgegeben.

In einer weiteren vorteilhaften Weiterbildung wird der kurskorrigierende Stelleingriff als Einzelradbremseingriff durchgeführt.

Die Erfindung wird nachfolgend anhand von eines Ausführungsbeispiels unter Bezugnahme auf Figuren näher beschrieben. Dabei zeigen:
- Figur 1:: ein Blockschaltbild des erfindungsgemäßen Fahrerassistenzsystems,
- Figur 2:: eine typische Verkehrssituation auf einer zweispurigen Straße,
- Figur 3:: eine typische Verkehrsituation auf einer Straße mit Gegenverkehr,
- Figur 4:: eine typische Verkehrsituation auf einer Straße mit unzulässigem Spurwechsel.

Einander entsprechende Teile sind in allen Figuren mit gleichem Bezugszeichen versehen.

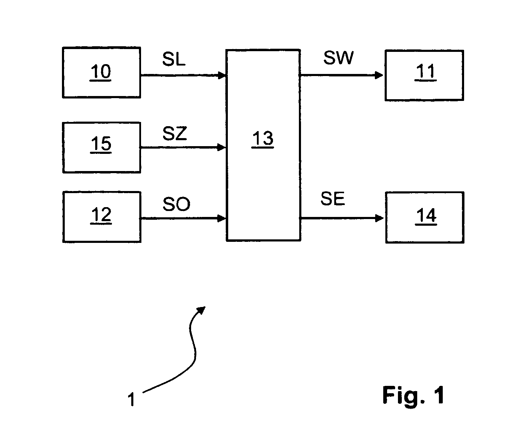

Figur 1 zeigt ein Fahrerassistenzsystem 1 für ein Fahrzeug, mit einer Fahrspurerkennungseinrichtung 10, einer Warneinrichtung 11, einer Objekterkennungseinrichtung 12, einer Steuereinrichtung 13, einer Stelleinrichtung 14 zur Steuerung der Querbewegung des Fahrzeugs und einer Zustandserfassungseinrichtung 15 zur Erfassung des Bewegungszustands des Fahrzeugs.

Die Fahrspurerkennungseinrichtung 10 ist als videobasiertes Erkennungssystem ausgeführt, das Videobilder von einem Straßenabschnitt vor dem Fahrzeug aufnimmt und durch Bildverarbeitung Fahrspurmarkierungen erkennt, die zur Fahrspurbegrenzung auf der von Fahrzeug befahrenen Straße aufgebracht sind, und das anhand der erkannten Fahrspurmarkierungen den Verlauf der vom Fahrzeug befahrenen Fahrspur sowie die Lage des Fahrzeugs innerhalb der Fahrspur ermittelt. Die Fahrspurerkennungseinrichtung 10 erkennt weiterhin, anhand der Art wie Fahrspurmarkierungen ausgeführt sind, ob es zulässig oder unzulässig ist, diese zu überfahren. Üblicherweise ist ein Überfahren einer Fahrspurmarkierung unzulässig, wenn sie als durchgezogene Linie ausgeführt ist, und zulässig, wenn sie als unterbrochene Linie ausgeführt ist. Bei Fahrspurmarkierungen, die als Doppellinie ausgeführt sind, ist dabei die Art der inneren Linie maßgeblich für die Entscheidung, ob es zulässig oder unzulässig ist, diese zu überfahren. Die ermittelten Informationen bezüglich des Verlaufs und der Art der Fahrspurmarkierungen und bezüglich der Lage des Fahrzeugs in der Fahrspur werden von der Fahrspurerkennungseinrichtung 10 als Spurinformationen SL an die Steuereinrichtung 13 weitergegeben.

Die Objekterkennungseinrichtung 12 ist als Radarsystem ausgeführt, das mehrere am Fahrzeug verteilt angeordnete Radarsensoren aufweist, die nach vorne, nach hinten und zu den Seiten des Fahrzeugs ausgerichtet sind, und die geeignet sind, stehende und bewegte seitliche und vordere Objekte zu detektieren, welche sich außerhalb der vom Fahrzeug befahrenen Fahrspur unmittelbar neben dem Fahrzeug, seitlich vor dem Fahrzeug und seitlich hinter dem Fahrzeug befinden bzw. innerhalb der vom Fahrzeug befahrenen Fahrspur vor dem Fahrzeug befinden. Die Objekterkennungseinrichtung 12 ist damit in der Lage, stationäre Hindernisse außerhalb der befahrenen Fahrspur zu erkennen, insbesondere Leitplanken oder sonstige Bebauungen, Pflanzen und parkende Fahrzeuge, aber auch Fahrzeuge, die sich auf einer benachbarten Gegenfahrspur dem Fahrzeug von vorne nähern oder die sich auf einer Nachbarspur von hinten dem Fahrzeug nähern und in dessen Totwinkelbereich eintreten. Die Objekterkennungseinrichtung 12 ist ebenso in der Lage, Fahrzeuge und stationäre Hindernisse zu erkennen, die sich vor dem Fahrzeug innerhalb der vom Fahrzeug befahrenden Fahrspur befinden.

Die Objekterkennungseinrichtung 12 ermittelt den Abstand und die Geschwindigkeit der seitlichen bzw. vorderen Objekte relativ zu dem Fahrzeug und gibt diese Informationen als Objektinformationen SO an die Steuereinrichtung 13 weiter.

Die Zustanderfassungseinrichtung 15 umfasst Sensoren zur Ermittlung der Geschwindigkeit des Fahrzeugs und des Lenkwinkels oder des Gierwinkels des Fahrzeugs und gibt diese Informationen als Zustandsinformationen SZ an die Steuereinrichtung 13 weiter.

Die Steuereinrichtung 13 stellt anhand der Spurinformationen SL, der Objektinformationen SO und der Zustandsinformationen SZ fest, ob eine Spurverlasstendenz vorliegt und gibt, falls dies zutrifft, ein Warnsignal SW an die Warneinrichtung 11 aus, welche ihrerseits eine Spurverlasswarnung an den Fahrer des Fahrzeugs ausgibt. Die Warneinrichtung 11 ist vorteilhafterweise als haptische Warneinrichtung ausgeführt, die am Lenkrad des Fahrzeugs eine vom Fahrer fühlbare Vibration als Spurverlasswarnung bewirkt. Zusätzlich kann auch eine akustische oder optische Warnung an den Fahrer als weitere Spurverlasswarnung ausgegeben werden.

Die Steuereinrichtung stellt weiterhin anhand der Spurinformationen SL, der Objektinformationen SO und der Zustandsinformationen SZ fest, ob die Spurverlasstendenz im Anschluss an die Ausgabe der Spurverlasswarnung nach einer vorgebbaren Reaktionszeitdauer weiterhin besteht. Wenn dies der Fall ist, hat der Fahrer auf die Spurverlasswarnung nicht oder nicht ausreichend reagiert und es wird daraufhin ein Stellsignal SE an die Stelleinrichtung 14 ausgegeben, die die Querbewegung des Fahrzeugs in Sinne einer Reduzierung der Spurverlasstendenz steuert.

Die Stelleinrichtung 14 ist im vorliegenden Ausführungsbeispiel als Bremssteuereinrichtung ausgeführt, welche durch gezielte Einzelradbremsung ein der Spurverlasstendenz entgegen wirkendes Giermoment erzeugt. Die Stelleinrichtung 14 kann zusätzlich oder alternativ auch als Lenksteuereinrichtung ausgebildet sein, die auf eine Lenkanlage des Fahrzeugs ein der Spurverlasstendenz entgegen wirkendes Lenkmoment ausübt.

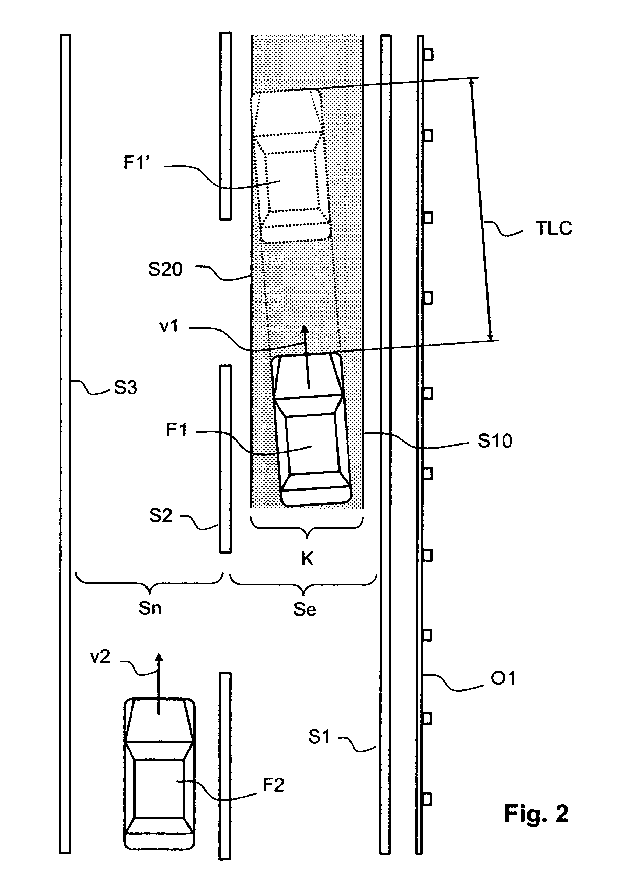

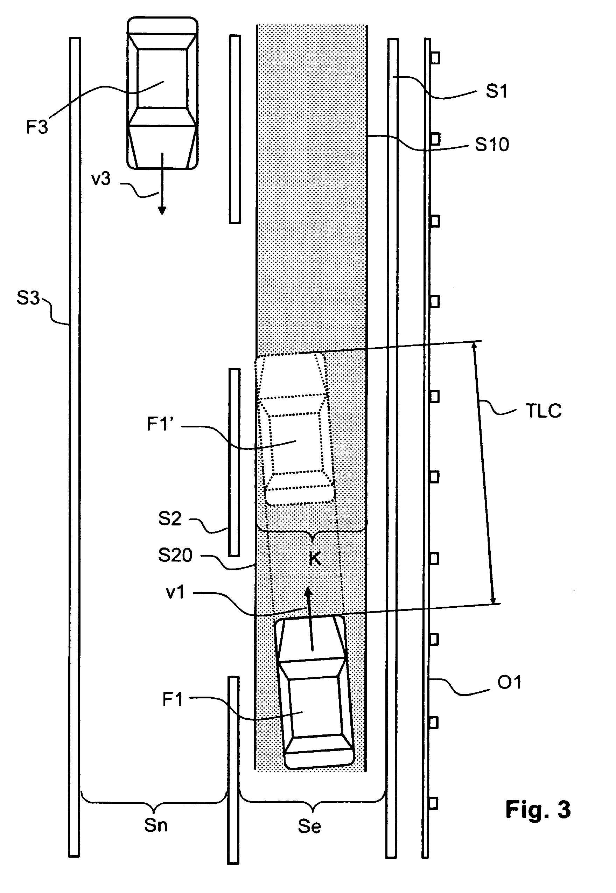

Die Steuereinrichtung 13 ist eingerichtet, das Stellsignal SE zu unterdrücken, wenn bestimmte Eingriffs-Ausblendbedingungen erfüllt sind. Die Details hierzu werden anhand der Figuren 2 und 3 näher erläutert.

Figur 2 zeigt in einer schematischen Darstellung eine Straße mit zwei durch Fahrspurmarkierungen S1, S2, S3 begrenzten Fahrspuren Se, Sn, und mit zwei in jeweils einer der Fahrspuren Se, Sn fahrenden Fahrzeugen F1, F2. Die beiden äußeren Fahrspurmarkierungen S1, S3 sind als durchgezogene Linien ausgeführt und die mittlere Fahrspurmarkierung S2 ist als unterbrochene Linie ausgeführt. Damit ist ein Überfahren der äußeren Fahrspurmarkierungen S1, S3 unzulässig und ein Überfahren der mittleren Fahrspurmarkierung S2 zulässig.

Bei dem Fahrzeug F1 handelt es sich um ein mit dem erfindungsgemäßen Fahrerassistenzsystem 1 ausgestattetes Fahrzeug. Es fährt innerhalb der Fahrspur Se, die nachfolgend als eigene Fahrspur bezeichnet wird, und befindet sich dort innerhalb eines durch fiktive Begrenzungslinien S10, S20 begrenzten Fahrkorridors K. Der Fahrkorridor K repräsentiert den gewünschten Aufenthaltsbereich des Fahrzeugs F1 innerhalb der eigenen Fahrspur Se. Die Begrenzungslinien S10, S20 können in Abhängigkeit der Geschwindigkeit und/oder in Abhängigkeit von einer Fahrereingabe verschoben werden, insbesondere können sie derart verschoben werden, dass sie mit den Positionen der Spurmarkierungen S1, S2 übereinstimmen. Das Fahrzeug F1 bewegt sich mit einer durch einen Pfeil dargestellten Geschwindigkeit v1.

Das Fahrzeug F2 befindet in der zur eigenen Fahrspur Se benachbarten Fahrspur Sn und nähert sich dem Fahrzeug F1 von hinten. Die Geschwindigkeit v2 und Fahrtrichtung des Fahrzeugs F2 ist durch einen Pfeil angedeutet. Das Fahrzeug F2 befindet sich im Erfassungsbereich der Objekterkennungseinrichtung 12 und wird von dieser als bewegtes seitliches Objekt detektiert.

Neben der eigenen Fahrspur Se befindet sich eine Leitplanke O1, die von der Objekterkennungseinrichtung 12 als stehendes seitliches Objekt detektiert wird.

Figur 3 zeigt ebenfalls in einer schematischen Darstellung eine Straße mit zwei durch Fahrspurmarkierungen S1, S2, S3 begrenzten Fahrspuren Se, Sn, und mit zwei in jeweils einer der Fahrspuren Se, Sn fahrenden Fahrzeugen F1, F3. Das Fahrzeug F3 befindet sich vor dem Fahrzeug F1 auf der zur eigenen Fahrspur Se benachbarten Fahrspur Sn und fährt in dieser Fahrspur Sn mit einer durch einen Pfeil dargestellten Geschwindigkeit v3.

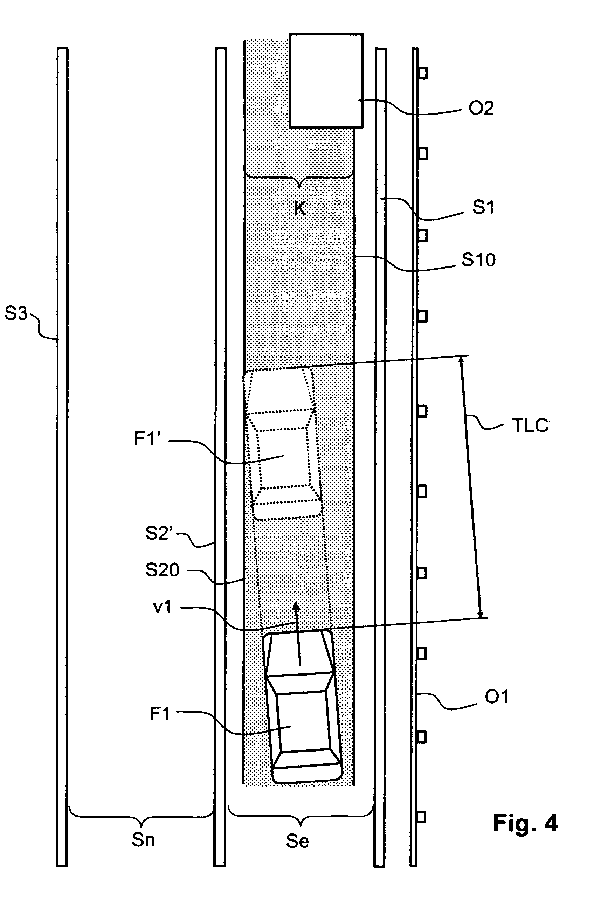

Figur 4 zeigt ebenfalls in einer schematischen Darstellung eine Straße mit zwei durch Fahrspurmarkierungen S1, S2', S3 begrenzten Fahrspuren Se, Sn, mit dem in der Fahrspur Se fahrenden Fahrzeug F1 und einem sich vor dem Fahrzeug F1 in der Fahrspur Se befindenden vorderen Objekt 02. Das vordere Objekt 02, beispielsweise ein stehendes oder langsam fahrendes Fahrzeug, stellt für das Fahrzeug F1 ein Hindernis dar, d.h. ein kollisionsgefährdendes Objekt, mit dem das Fahrzeug F1 innerhalb eines Vorausschauzeitraums voraussichtlich kollidieren wird, wenn keine Gegenmaßnahmen ergriffen werden. Der Fahrer des Fahrzeugs F1 will diesem kollisionsgefährdenden vorderen Objekt 02 ausweichen und hierzu die Fahrspurmarkierung S2' überfahren. Letztere ist als durchgezogene Linie ausgeführt, d.h. ein Überfahren der Fahrspurmarkierung S2' ist nicht zulässig. Dennoch soll in einem solchen Fall vorteilhafterweise lediglich eine Spurverlasswarnung ausgegeben werden und ein dem Ausweichmanöver entgegenwirkender Stelleingriff unterdrückt werden. Das heißt, dem Fahrer wird die volle Verantwortung für die Bewältigung der durch das vordere Objekt 02 bedingten Gefahrensituation belassen.

Die Steuereinrichtung 13 führt anhand der bereitgestellten Objektinformationen SO eine Situationsbewertung durch, um festzustellen, ob es sich bei den erfassten seitlichen Objekten F2, F3, O1 bzw. vorderen Objekten 02 um kollisionsgefährdende Objekte handelt, d.h. um festzustellen, ob die erfassten seitlichen Objekte F2, F3, O1 eine Kollisionsgefahr für den Fall darstellen, dass das Fahrzeug F1 die eigene Fahrspur Se verlassen wird, bzw. um festzustellen, ob die erfassten vorderen Objekte 02 eine Kollisionsgefahr für den Fall darstellen, dass das Fahrzeug F1 die eigene Fahrspur Se nicht verlassen wird.

So wird beispielsweise das sich dem Fahrzeug F1 im Totwinkelbereich nähernde Fahrzeug F2 als kollisionsgefährdendes Objekt bewertet, wenn es sich innerhalb eines vorgegebenen Abstandsbereichs hinter dem Fahrzeug F1 befindet und sich mit hoher Geschwindigkeit v2, d.h. mit einer Geschwindigkeit v2, die um einen vorgegebenen Schwellwert höher ist als die Geschwindigkeit v1 des Fahrzeugs F1, dem Fahrzeug F1 nähert. Das entgegenkommende Fahrzeug F3 wird als kollisionsgefährdendes Objekt bewertet, wenn sich seine vorausschauend ermittelte Trajektorie mit der ebenfalls vorausschauend ermittelten Trajektorie des Fahrzeugs F1 in einer Position kreuzen, die die beiden Fahrzeuge F1, F3 bei unveränderter Aufrechterhaltung ihrer Bewegungszustände gleichzeitig erreichen werden. Entsprechend wird die Leitplanke 02 als kollisionsgefährdendes Objekt bewertet, wenn die Trajektorie des Fahrzeugs F1 die Leitplanke O1 berühren wird.

Falls eines der seitlichen Objekte F2, F3, O1 als kollisionsgefährdendes Objekt bewertet wird, kann die Steuereinrichtung 13 dem jeweiligen Objekt zusätzlich noch ein Gefahrenmaß zuordnet, das angibt, wie hoch die Kollisionswahrscheinlichkeit oder Kollisionsstärke ist.

Ein erfasstes vorderes Objekt 02 wird beispielsweise als kollisionsgefährdendes Objekt bewertet, wenn eine Situationsbewertung anhand des Abstands und der Relativgeschwindigkeit zwischen dem Fahrzeug F1 und dem erfassten vorderen Objekt 02 ergibt, dass es innerhalb einer vorgebbaren Zeitdauer zu einer Kollision kommen wird, sollte das Fahrzeug F1 bei unveränderter Relativgeschwindigkeit in der Fahrspur Se gehalten werden, oder dass die Zeit, die dem Fahrer maximal als Handlungszeitspanne verbleibt, um eine Kollision durch Einleitung einer kollisionsvermeidenden Maßnahme, insbesondere einer Vollbremsung oder eines Ausweichmanövers, gerade noch zu vermeiden, geringer ist als eine vorgebbare Zeitschwelle.

Die Steuereinrichtung 13 ermittelt anhand der Zustandsinformationen SZ, insbesondere anhand der Geschwindigkeit v1 des Fahrzeugs F1 und anhand eines an einer Lenkanlage des Fahrzeugs F1 eingestellten Lenkwinkels vorausschauend für einen Vorausschauzeitraum oder eine Vorausschauentfernung die Trajektorie des Fahrzeugs F1. Hierbei handelt es sich um eine vorhergesagte Bewegungsspur, entlang der sich das Fahrzeug F1 während des Vorausschauzeitraums oder bis zum Erreichen der Vorausschauentfernung bewegen wird. Daraufhin ermittelt die Steuereinrichtung 13 eine Zeitdauer TLC (time to line crossing), die das Fahrzeug F1 voraussichtlich benötigen wird, um den Fahrkorridor K zu verlassen, d. h. die Zeitdauer, die das Fahrzeug F1 benötigen wird, um die punktiert dargestellte Position F1' zu erreichen, in der die Begrenzungslinie S20 des Fahrkorridors K überfahren wird. Diese Zeitdauer wird nachfolgend als Spurverlasszeitdauer TLC bezeichnet.

Die Steuereinrichtung 13 vergleicht anschließend die ermittelte Spurverlasszeitdauer TLC mit einer vorgegebenen Zeitschwelle. Ist die Spurverlasszeitdauer TLC geringer als die vorgegebene Zeitschwelle, bestimmt die Steuereinrichtung 13, dass das Fahrzeug F1 eine Spurverlasstendenz aufweist und gibt daraufhin in einer ersten Eskalationsstufe die Spurverlasswarnung über die Warneinrichtung 11 and den Fahrer des Fahrzeugs F1 aus. Die Steuereinrichtung 13 stellt weiterhin fest, ob die Spurverlasstendenz innerhalb einer vorgegebenen Reaktionszeit nach der Ausgabe der Spurverlasswarnung weiterhin besteht. Ist dies der Fall, wird in einer zweiten Eskalationsstufe das Stellsignal SE an die Stelleinrichtung 14 ausgegeben, um das Fahrzeug F1 durch einen von der Stelleinrichtung 14 durchgeführten kurskorrigierenden Stelleingriff zurück in den Fahrkorridor K zu bewegen.

Das Stellsignal SE wird bei Feststellung einer Kollisionsgefahr mit einem der seitlichen Objekte vorteilhafterweise in Abhängigkeit des dem betreffenden Objekt zugeordneten Gefahrenmaßes derart generiert, dass der von der Stelleinrichtung 14 durchgeführte Stelleingriff bei hohem Gefahrenmaß stärker durchgeführt wird und/oder früher eingeleitet wird als bei geringem Gefahrenmaß. Man erhält somit eine Adaption des Stelleingriffs an die Kritikalität der sich beim Spurverlassen ergebenden Verkehrssituation.

Die Ausgabe des Stellsignals SE wird jedoch unterdrückt, wenn folgende Eingriffs-Ausblendbedingungen erfüllt sind:
a) die Steuereinrichtung 13 hat von der Fahrspurerkennungseinrichtung 10 die Information erhalten, dass ein Überfahren der betreffenden Fahrspurmarkierung S2 zulässig ist, d.h. dass die Fahrspurmarkierung S2 - wie in den Figuren 2 und 3 dargestellt - als unterbrochene Linie ausgeführt ist, und die Steuereinrichtung 13 hat zusätzlich anhand der vorgenommenen Situationsbewertung vorab festgestellt, dass beim Spurverlassen keine Kollisionsgefahr mit einem der erfassten seitlichen Objekte F2, F3, O1 besteht,
oder
b) die Steuereinrichtung 13 hat anhand der vorgenommenen Situationsbewertung vorab festgestellt, dass beim Halten des Fahrzeugs F1 in der Fahrspur Se die Gefahr einer Kollision mit einem erfassten vorderen Objekt 02 besteht.

Bedingung für die Auslösung der zweiten Eskalationsstufe ist demnach die vorherige Ausgabe der Spurverlasswarnung in der ersten Eskalationsstufe und die Feststellung, dass ein Verlassen der Fahrspur Se aufgrund der Ausführungsart der hierbei zu überfahrenden Fahrspurmarkierung S1, S2 unzulässig ist bzw. dass bei einem zulässigen Verlassen der Fahrspur Se die Gefahr einer Kollision mit einem der erfassten stehenden oder bewegten seitlichen Objekten F2, F3, O1 nicht ausgeschlossen werden kann, sowie zusätzlich die Feststellung, dass die Gefahr einer Kollision mit einem erfassten stehenden oder bewegten vorderen Objekt 02 nicht besteht.

## Patentansprüche

1. Fahrerassistenzsystem (1) für ein Fahrzeug (F1),
mit einer Fahrspurerkennungseinrichtung (10) zur Erfassung einer vom Fahrzeug (F1) befahrenen Fahrspur (Se) anhand von spurbegrenzenden Fahrspurmarkierungen (S1, S2),
mit einer Warneinrichtung (11) zur Ausgabe einer Spurverlasswarnung an einen Fahrer des Fahrzeugs (F1) beim Erkennen einer Spurverlasstendenz,
mit einer Objekterkennungseinrichtung (12) zur Detektion von sich neben der erfassten Fahrspur (Se) befindenden seitlichen Objekten (F2, F3, O1) und
mit einer Steuereinrichtung (13) zur Durchführung eines kurskorrigierenden Stelleingriffs,
wobei die Fahrspurerkennungseinrichtung (10) eingerichtet ist, anhand der Art der Fahrspurmarkierungen (S1, S2) zu erkennen, ob ein Verlassen der Fahrspur (Se) durch Überfahren der jeweiligen Fahrspurmarkierung (S1, S2) zulässig ist oder unzulässig ist,
**dadurch gekennzeichnet,**
**dass** die Steuereinrichtung (13) eingerichtet ist, den Stelleingriff im Anschluss an die Ausgabe der Spurverlasswarnung auszulösen, wobei Bedingung für die Auslösung des Stelleingriffs ist, dass entweder ein Verlassen der Fahrspur (Se) unzulässig ist oder dass bei einem zulässigen Verlassen der Fahrspur (Se) die Gefahr einer Kollision mit einem der erfassten seitlichen Objekte (F2, F3, O1) besteht.

2. Fahrerassistenzsystem nach Anspruch 1,
**dadurch gekennzeichnet,**
**dass** die Objekterkennungseinrichtung (12) eingerichtet ist, sich innerhalb der Fahrspur (Se) vor dem Fahrzeug (F1) befindende Objekte (02) als vordere Objekte zu detektieren und
**dass** die Steuereinrichtung (13) eingerichtet ist, den Stelleingriff zu unterdrücken, wenn eine Situationsbewertung ergibt, dass die Gefahr einer Kollision mit einem der erfassten vorderen Objekte (02) besteht.

3. Fahrerassistenzsystem nach Anspruch 1 oder 2,
**dadurch gekennzeichnet, dass**
die Fahrspurerkennungseinrichtung (10) eingerichtet ist, das Verlassen der Fahrspur (Se) als zulässig zu beurteilen, wenn die hierbei überfahrene Fahrspurmarkierung (S2) als unterbrochene Linie ausgeführt ist, und als unzulässig zu beurteilen, wenn die hierbei überfahrene Fahrspurmarkierung (S1) als durchgezogene Linie ausgeführt ist.

4. Fahrerassistenzsystem nach einem der vorhergehenden Ansprüche,
**dadurch gekennzeichnet, dass**
die Steuereinrichtung (13) eingerichtet ist, den Stelleingriff durch individuelles Abbremsen einzelner Räder des Fahrzeugs (F1) durchzuführen.

5. Fahrerassistenzsystem nach einem der vorhergehenden Ansprüche,
**dadurch gekennzeichnet, dass**
die Warneinrichtung (11) eingerichtet ist die Spurverlasswarnung in Form von Lenkradvibrationen an den Fahrer auszugeben.

6. Fahrerassistenzsystem nach einem der vorhergehenden Ansprüche,
**dadurch gekennzeichnet, dass**
die Objekterkennungseinrichtung (12) eingerichtet ist stehende und bewegte Objekte (O1, F2, F3, O2) außerhalb und innerhalb der Fahrspur (Se) zu erkennen.

7. Fahrerassistenzsystem nach einem der vorhergehenden Ansprüche,
**dadurch gekennzeichnet, dass**
die Steuereinrichtung (13) eingerichtet ist, den Stelleingriff bei einem zulässigen Verlassen der Fahrspur (Se) zu unterdrückten, sofern neben der Fahrspur (Se) eine für einen Spurwechsel ausreichend große Freifläche vorhanden ist.

8. Fahrerassistenzsystem nach einem der vorhergehenden Ansprüche,
**dadurch gekennzeichnet, dass**
die Objekterkennungseinrichtung (12) als Radarsystem ausgeführt ist.

9. Verfahren zur Unterstützung des Fahrers eines Fahrzeugs (F1) beim Halten einer durch Fahrspurmarkierungen (S1, S2) begrenzten Fahrspur (Se), wobei die Fahrspurmarkierungen (S1, S2) und die Lage des Fahrzeugs (F1) innerhalb der Fahrspur (Se) erfasst werden, wobei die Umgebung des Fahrzeugs auf das Vorhandensein von kollisionsgefährdenden Objekten (F2, F3, O1) neben der Fahrspur (Se) abgetastet wird, und wobei beim Verlassen oder drohenden Verlassen der Fahrspur (Se) eine Spurverlasswarnung an den Fahrer ausgegeben wird und/oder ein dem Spurverlassen entgegen wirkender
kurskorrigierender Stelleingriff durchgeführt wird,
wobei das Verlassen der Fahrspur (Se) anhand der Art der hierbei zu überfahrenden Fahrspurmarkierung (S1, S2) als zulässig oder unzulässig beurteilt wird,
**dadurch gekennzeichnet,**
**dass** der kurskorrigierende Stelleingriff zeitlich nach der Ausgabe der Spurverlasswarnung durchgeführt wird,
und **dass** der kurskorrigierende Stelleingriff unterdrückt wird, wenn das Verlassen der Fahrspur (Se) als zulässig beurteilt worden ist und keine kollisionsgefährdenden Objekte (F2, F3) neben der Fahrspur (Se) vorhanden sind.

10. Verfahren nach Anspruch 9,
**dadurch gekennzeichnet,**
**dass** die Umgebung des Fahrzeugs (F1) auf das Vorhandensein von kollisionsgefährdenden Objekten (02) vor dem Fahrzeug (F1) in der Fahrspur (Se) abgetastet wird
und **dass** der kurskorrigierende Stelleingriff unterdrückt wird, wenn vor dem Fahrzeug (F1) in der Fahrspur (Se) ein kollisionsgefährdendes Objekt (02) vorhanden ist.

11. Verfahren nach Anspruch 9 oder 10,
**dadurch gekennzeichnet, dass**
das Verlassen der Fahrspur (Se) als zulässig beurteilt wird, wenn die beim Spurverlassen zu überfahrende Fahrspurmarkierung (S2) als unterbrochene Linie ausgeführt ist.

12. Verfahren nach einem der Ansprüche 9 bis 11,
**dadurch gekennzeichnet, dass**
das Verlassen der Fahrspur (Se) als unzulässig beurteilt wird, wenn die beim Spurverlassen zu überfahrende Fahrspurmarkierung (S2) als durchgezogene Linie ausgeführt ist.

13. Verfahren nach einem der Ansprüche 9 bis 12,
**dadurch gekennzeichnet, dass**
abgeschätzt wird, wie hoch beim Spurverlassen die Gefahr einer Kollision des Fahrzeugs (F1) mit einem der kollisionsgefährdenden Objekte (F2, F3) ist, und dass der Stelleingriff in Abhängigkeit der abgeschätzten Gefahrenhöhe durchgeführt wird.

14. Verfahren nach einem der Ansprüche 9 bis 13,
**dadurch gekennzeichnet, dass**
die Spurverlasswarnung als haptische Warnung ausgegeben wird.

15. Verfahren nach einem der Ansprüche 9 bis 14,
**dadurch gekennzeichnet, dass**
der kurskorrigierende Stelleingriff als Einzelradbremseingriff durchgeführt wird.

## Claims

1. Driver assistance system (1) for a vehicle (F1),
comprising a lane detection device (10) for detecting a lane (Se) in which the vehicle travels using lane-delimiting lane markings (S1, S2), further comprising a warning device (11) for outputting a lane-leaving warning to a driver of the vehicle (F1) if a tendency to leave the lane is detected,
further comprising an object detection device (12) for the detection of lateral objects (F2, F3, O1) which are located adjacent to the detected lane (S2) and
further comprising a control device (13) for the execution of a course-correcting adjustment intervention,
wherein the lane detection device (10) is configured to detect, with reference to the type of lane markings (S1, S2), whether a leaving of the lane (Se) by crossing over the respective lane markings (S1, S2) is permissible or not permissible,
**characterised in that**
the control device (12) is configured to trigger the adjustment intervention following the output of the lane-leaving warning, wherein a precondition for the triggering of the adjustment intervention is either that a leaving of the lane (Se) is not permissible or that, in a permissible leaving of the lane (Se), there is a risk of a collision with one of the detected lateral objects (F2, F3, O1).

2. Driver assistance system according to claim 1,
**characterised in that**
the object detection device (12) is configured to detect objects (02) placed in front of the vehicle within the lane (Se) as front objects, and **in that**
the control device (13) is configured to suppress the adjustment intervention if a situation evaluation indicates that there is a risk of a collision with one of the detected front objects (02).

3. Driver assistance system according to claim 1 or 2,
**characterised in that**
the lane detection device (10) is configured to evaluate the leaving of the lane (Se) as permissible if the lane marking (S2) crossed in this process is a broken line, and to evaluate it as not permissible if the lane marking (S1) crossed in this process is a continuous line.

4. Driver assistance system according to any of the preceding claims, **characterised in that**
the control device (13) is configured to execute the adjustment intervention by individually braking individual wheels of the vehicle (F1).

5. Driver assistance system according to any of the preceding claims,
**characterised in that**
the warning device (11) is configured to output the lane-leaving warning to the driver in the form of steering wheel vibrations.

6. Driver assistance system according to any of the preceding claims,
**characterised in that**
the object detection device (12) is configured to detect the stationary and moving objects (O1, F2, F3, O2) outside of and within the lane (Se).

7. Driver assistance system according to any of the preceding claims,
**characterised in that**
the control device (13) is configured to suppress the adjustment intervention at a permissible leaving of the lane (Se), provided there is a sufficiently large free surface for a lane change.

8. Driver assistance system according to any of the preceding claims,
**characterised in that**
the object detection device (12) is designed as a radar system.

9. Method for supporting the driver of a vehicle (F1) in keeping to a lane (Se) defined by lane markings (S1, S2), wherein
the lane markings (S1, S2) and the position of the vehicle (F1) within the lane (Se) are detected, wherein the surroundings of the vehicle are scanned for the presence of objects (F2, F3, O1) which could potentially cause a collision adjacent to the lane (Se), and wherein, if the lane (Se) is left or a leaving of the lane (Se) is imminent, a lane-leaving warning is output to the driver and/or a course-correcting adjusting intervention which counteracts the leaving of the lane is executed, wherein, on the basis of the lane markings (S1, S2) which have to be crossed in this process, it is evaluated whether the leaving of the lane (Se) is permissible or not permissible,
**characterised in that**
the course-correcting adjusting intervention is executed after the output of the lane-leaving warning, and **in that**
the course-correcting adjusting intervention is suppressed if the leaving of the lane (Se) is found to be permissible and if there are no objects (F2, F3) which could potentially cause a collision adjacent to the lane (Se).

10. Method according to claim 9,
**characterised in that**
the surroundings of the vehicle (F1) are scanned for the presence of objects (02) which could potentially cause a collision in front of the vehicle (F1) in the lane (Se), and **in that**
the course-correcting adjusting intervention is suppressed if an object (02) which could potentially cause a collision is present in front of the vehicle (F1) in the lane (Se).

11. Method according to claim 9 or 10,
**characterised in that**
the leaving of the lane (Se) is evaluated as permissible if the lane marking (S2) to be crossed when leaving the lane is a broken line.

12. Method according to any of claims 9 to 11,
**characterised in that**
the leaving of the lane (Se) is evaluated as not permissible if the lane marking (S2) to be crossed when leaving the lane is a continuous line.

13. Method according to any of claims 9 to 12,
**characterised in that**
the level of the risk of a collision of the vehicle with one of the objects (F2, F3) which could potentially cause a collision as the lane is left is estimated, and **in that**
the adjustment intervention is executed in dependence on the estimated risk level.

14. Method according to any of claims 9 to 13,
**characterised in that**
the lane-leaving warning is output as a haptic warning.

15. Method according to any of claims 9 to 14,
**characterised in that**
the course-correcting adjustment intervention is executed as an intervention in which individual wheels are braked.

## Revendications

1. Système d'aide à la conduite (1) pour un véhicule automobile (F1) doté d'un dispositif de reconnaissance de voie de circulation (10) servant à détecter une voie de circulation (Se) empruntée par le véhicule automobile (F1) au moyen de marquages de voie délimitant la voie (S1, S2), d'un dispositif d'avertissement (11) servant à émettre une alerte de sortie de voie à l'intention d'un conducteur du véhicule automobile (F1) en cas de détection d'une tendance à sortir de la voie, d'un dispositif de reconnaissance d'objet (12) servant à détecter des objets (F2, F3, O1) latéraux se trouvant à proximité de la voie de circulation (Se) détectée et d'un dispositif de commande (13) pour mettre en oeuvre une action de réglage destinée à corriger la trajectoire, le dispositif de reconnaissance de voie de circulation (10) étant conçu pour identifier, en fonction du type de marquages de voie de circulation (S1, S2), si une sortie de la voie de circulation (Se) en franchissant le marquage de voie de circulation (S1, S2) est autorisée ou interdite, **caractérisé en ce que** le dispositif de commande (13) est conçu pour déclencher l'action de réglage à la suite de l'émission de l'alerte de sortie de voie, la condition pour le déclenchement de l'action de réglage étant soit qu'une sortie de la voie de circulation (Se) soit interdite, soit qu'en cas de sortie de voie de circulation (Se) autorisée il existe un risque de collision avec l'un des objets (F2, F3, O1) latéraux détectés.

2. Système d'aide à la conduite selon la revendication 1, **caractérisé en ce que** le dispositif de reconnaissance d'objet (12) est conçu pour détecter des objets (02) se trouvant devant le véhicule automobile (F1) à l'intérieur de la voie de circulation (Se) en tant qu'objets avant et **en ce que** le dispositif de commande (13) est conçu pour supprimer l'action de réglage lorsqu'une évaluation de la situation révèle qu'il existe un risque de collision avec l'un des objets (02) avant détectés.

3. Système d'aide à la conduite selon la revendication 1 ou 2, **caractérisé en ce que** le dispositif de reconnaissance de voie de circulation (10) conçu pour évaluer la sortie de voie de circulation (Se) comme autorisée lorsque le marquage de voie de circulation (S2) franchi ici est conçu comme une ligne discontinue et comme interdite lorsque le marquage de voie de circulation (S1) est conçu comme une ligne continue.

4. Système d'aide à la conduite selon l'une quelconque des revendications précédentes, **caractérisé en ce que** le dispositif de commande (13) est conçu pour mettre en oeuvre l'action de réglage par freinage individuel de chacune des roues du véhicule automobile (F1).

5. Système d'aide à la conduite selon l'une quelconque des revendications précédentes, **caractérisé en ce que** le dispositif d'avertissement (11) est conçu pour émettre l'alerte de sortie de voie sous forme de vibrations du volant à l'intention du conducteur.

6. Système d'aide à la conduite selon l'une quelconque des revendications précédentes, **caractérisé en ce que** le dispositif de reconnaissance d'objets (12) est conçu pour détecter des objets en mouvement et immobiles (01, F2, F3, 02) à l'extérieur et à l'intérieur de la voie de circulation (Se).

7. Système d'aide à la conduite selon l'une quelconque des revendications précédentes, **caractérisé en ce que** le dispositif de commande (13) est conçu pour supprimer l'action de réglage en cas d'une sortie autorisée de la voie de circulation (Se) dans la mesure où à proximité de la voie de circulation (Se) se trouve un espace libre suffisamment grand pour effectuer un changement de voie.

8. Système d'aide à la conduite selon l'une quelconque des revendications précédentes, **caractérisé en ce que** le dispositif de reconnaissance d'objets (12) est conçu comme un système radar.

9. Procédé pour aider le conducteur d'un véhicule automobile (F1) à respecter une trajectoire délimitée par des marquages de voie de circulation (S1, S2), les marquages de voie de circulation (S1, S2) et la position du véhicule automobile (F1) étant détectés à l'intérieur de la voie de circulation (Se), l'environnement du véhicule automobile étant balayé pour détecter la présence d'objets entraînant un risque de collision (F2, F3, O1) à proximité de la voie de circulation (Se), et en cas de sortie ou de menace de sortie de voie (Se) une alerte de sortie de voie étant émise à l'intention du conducteur et / ou une action de réglage destinée à corriger et à prendre des mesures pour éviter la sortie de voie étant mises en oeuvre, la sortie de voie de circulation (Se) étant évaluée comme autorisée ou interdite en fonction du type de marquage de voie de circulation (S1, S2) à franchir, **caractérisé en ce que** l'action de réglage destinée à corriger la trajectoire est mise en oeuvre temporellement après le déclenchement de l'alerte de sortie de voie, et **en ce que** l'action de réglage destinée à corriger la trajectoire est supprimée lorsque la sortie de voie de circulation (Se) a été évaluée comme autorisée et qu'aucun objet (F1, F2) entraînant un risque de collision ne se trouve à proximité de la voie de circulation (Se).

10. Procédé selon la revendication 9, **caractérisé en ce que** l'environnement du véhicule automobile (F1) est balayé pour détecter la présence d'objets (02) entraînant un risque de collision devant le véhicule automobile (F1) dans la voie de circulation (Se) et **en ce que** l'action de réglage destinée à corriger la trajectoire est supprimée lorsque devant le véhicule automobile (F1) dans la voie de circulation (Se) se trouve un objet entraînant un risque de collision.

11. Procédé selon la revendication 9 ou 10, **caractérisé en ce que** la sortie de la voie de circulation (Se) est évaluée comme autorisée lorsque le marquage de voie de circulation (S2) à franchir en cas de sortie de voie est conçu comme une ligne discontinue.

12. Procédé selon l'une quelconque des revendications 9 à 11, **caractérisé en ce que** la sortie de la voie de circulation (Se) est évaluée comme interdite lorsque le marquage de voie de circulation (S2) à franchir en cas de sortie de voie est conçu comme une ligne continue.

13. Procédé selon l'une quelconque des revendications 9 à 12, **caractérisé en ce qu'**il est évalué quel est le niveau de risque de collision entre le véhicule automobile (F1) et un des objets (F2, F3) entraînant un risque de collision en cas de sortie de voie et **en ce que** l'action de réglage est mise en oeuvre en fonction du niveau de risque évalué.

14. Procédé selon l'une quelconque des revendications 9 à 13, **caractérisé en ce que** l'alerte de sortie de voie est émise en tant qu'alerte haptique.

15. Procédé selon l'une quelconque des revendications 9 à 14, **caractérisé en ce que** l'action de réglage destinée à corriger la trajectoire est mise en oeuvre en tant qu'action de freinage de roue individuelle.
